# EUROPÄISCHE PATENTANMELDUNG

(11) **EP 1 750 463 A1**
(43) Veröffentlichungstag der Anmeldung: **07.02.2007**
(21) Anmeldenummer: 05016872.3
(22) Anmeldetag: 03.08.2005
(51) Int. Cl.: H04Q 7/28

(54) **Push-to-talk-over-cellular (PoC)**

(71) Anmelder: SIEMENS AKTIENGESELLSCHAFT, 80333 München (DE)
(72) Erfinder: Gugerell, Martin, 1080 Wien (AT); Swetina, Jörg, Dr., 1060 Wien (AT)

(57) **Zusammenfassung**

Eine erhöhte Flexibilisierung von Push-to-Talk-over-cellular-Verbindungen wird ermöglicht durch ein Verfahren, um zu einen von einem ersteren Teilnehmer (A/1) einer aufgebauten POC-Sitzung vorgegebenen Ziel (B/7) eine Verbindung (10) aufzubauen,
wobei während der POC-Sitzung eine Nachricht (8) vom ersteren Teilnehmer an mindestens einen weiteren Teilnehmer (B/7) der POC-Sitzung (1, 7, 4) übertragen wird,
welche angibt, dass und zu welchem Ziel die Verbindung aufgebaut werden soll.

## Beschreibung

Die Erfindung betrifft ein Verfahren, um zu einem von einem Teilnehmer einer bereits aufgebauten "Push-to-Talk-over-Cellular-" (= "POC"-) Sitzung vorgegebenen Ziel eine Verbindung (im folgenden weitere Verbindung genannt) aufzubauen.

Push-to-Talk-over-Cellular Verbindungen sind dem Fachmann an sich bekannt.

Aufgabe der vorliegenden Erfindung ist es, eine flexiblere Handhabung von Push-to-Talk Verbindungen zu ermöglichen. Die Aufgabe wird durch den Gegenstand des Anspruchs 1 gelöst.

Die Erfindung offenbart ein Verfahren, um zu einem von einem Teilnehmer (im folgenden auch ersterer Teilnehmer genannt) einer aufgebauten Push-to-Talk-over-Celluar-Sitzung vorgegebenen Ziel eine Verbindung (im folgenden auch "weitere Verbindung" genannt) aufzubauen, indem während der Push-to-Talk-over-Cellular- (POC) - Sitzung eine Nachricht von dem Teilnehmer zu mindestens einem weiteren Teilnehmer der Push-to-Talk-over-Cellular- Sitzung übertragen wird, welche angibt, dass und zu welchem Ziel die weitere Verbindung aufgebaut werden soll (Eine POC-Session kann gegebenenfalls auch aus mehreren gleichwertigen Teilnehmern bestehen, von denen einer einen "Rückruf" im Sinne der Erfindung anfordern kann) .

Die Nachricht kann eine beliebige während der Push-to-Talk-over-Cellular Sitzung (POC session) übertragene Signalisierungsnachricht sein; nach einer Ausgestaltung der Erfindung ist sie eine Terminierungsnachricht, die an sich auch zum Beenden der POC Sitzung vorgesehen oder einsetzbar ist. Die Nachricht enthält zweckmäßig als Angabe zum Ziel dessen Telefonnummer und/oder Zieladresse. Nach einer Ausgestaltung der Erfindung wird mindestens ein weiterer Teilnehmer der POC Sitzung aufgefordert, zu bestätigen, dass (auch) er eine Verbindung nur oder zusätzlich zum angegebenen Ziel will und nur im Falle der Feststellung einer Eingabe einer Bestätigung dieses weiteren Teilnehmers wird die weitere Verbindung aufgebaut. Die Verbindung kann zu dem Mobilfunkendgerät aufgebaut werden, über welches der Teilnehmer bereits die POC-Sitzung benutzt, sie kann jedoch auch zu einem beliebigen anderen mobilen, Festnetz- oder sonstigen Endgerät aufgebaut werden. (Vorstellbar sind auch Ausführungen bei denen die Zieladresse nur im logischen Sinne zum erstern Teilnhemer gehört; z.B. ein Infodienst, der über die erfindungsgemäße Meldung den angesprochenen Teilnehmern eine Nummer/Zieladresse einer Info-Hotline übermittelt, über die sie dann Detailfragen klären können etc.).

Die Verbindung kann eine Verbindung zwischen einem oder mehreren oder allen weiteren Teilnehmern der POC Sitzung und dem vorgegebenen Ziel sein (Das Ziel kann z.B. auch eine Hotline sein, hinter der sich eine ganze Reihe von Anschlüssen verbirgt, so dass auch mehrere der Session-Teilnehmer gleichzeitig dort anrufen können. Die einfache Variante eines "Rückrufs" an ein anderes Endgrät des ersteren Teilnehmers ist nur eine, wenn auch wohl sehr verbreitete, Basisvariante).

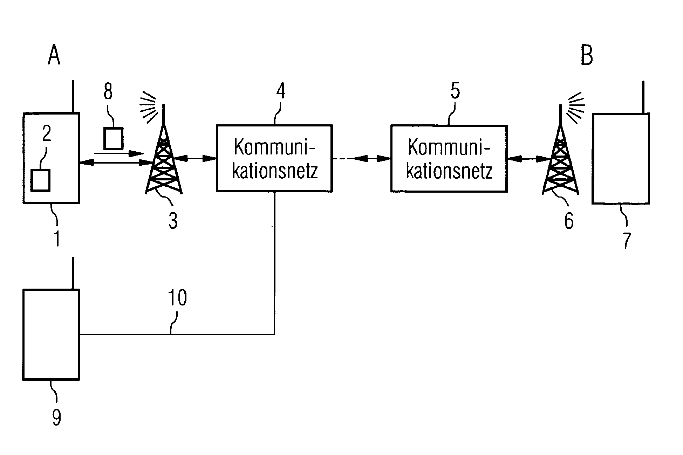

Weitere Merkmale und Vorteile der Erfindung ergeben sich aus den Patentansprüchen und der nachfolgenden Beschreibung eines Ausführungsbeispiels anhand der Zeichnung. Dabei zeigt
Fig. 1 beispielhaft schematisch eine Implementierung der Erfindung.

Figur 1 zeigt ein Mobilfunkendgerät 1 mit einer beispielhaft dargestellten Taste 2 eines Teilnehmers A, mit welchem (1) dieser (A) über eine Basisstation 3, mindestens ein eine POC Sitzung vermittelndes Kommunikationsnetz 4/5 sowie eine weitere Basisstation 6 mit einem Mobilfunkendgerät 7 eines weiteren Teilnehmers B einer Push-to-Talk-over-Cellular (POC) Sitzung verbunden ist. (Insbesondere die weitere Verbindung kann aber auch über z.B. ein Festnetz verlaufen). Eine derartige POC- Sitzung wird wie der Name Push-to-Talk-over-Cellular andeutet(dies bedeutet etwa: Knopf drücken für eine Gesprächsverbindung über ein Mobilfunknetz) durch z.B. einen Knopfdruck auf eine Taste (2) eines Endgerätes 1 eines Teilnehmers A zu (beispielsweise im Endgerät 1 voreingestellten) weiteren Teilnehmern B usw. über ein Mobilfunknetz (4 usw.) aufgebaut. Wenn z.B. der Teilnehmer A von seiner aufgebauten Push-to-Talk-over-Cellular- Verbindung (vorzugsweise ohne diese Gesprächsverbindung zu unterbrechen) auf eine herkömmliche (GSM, Voice over IP, etc.) Verbindung umschalten möchte, sendet er z.B. eine Nachricht 8 in Form beispielsweise einer Signalisierungsnachricht in Richtung des Mobilfunknetzes und/oder des anderen Teilnehmers B ab, welches/welcher (z.B. im Rahmen des Push-to-Talk-over-Cellular Sitzungsprotokolls), entweder daraufhin oder nur nach einer Bestätigung durch einen Tastendruck seitens des Mobilfunkteilnehmers B eine weitere Verbindung zu dem für die Push-to-Talk-over-Cellular- Sitzung verwendeten Endgerät 1 des Teilnehmers A oder zu einem weiteren Endgerät 9 des Teilnehmers A , oder einem beliebigen vom Teilnehmer A definierten Ziel aufbaut. Die Umschaltung (zur weiteren Verbindung) kann auch (vollständig) im Mobilfunkendgerät erfolgen,

Die Push-to-Talk-over-Cellular Verbindung zum Teilnehmer A kann insbesondere kurz vor, gleichzeitig oder kurz nach dem Aufbau der genannten weiteren Verbindung aufgelöst werden - dabei kann auch gegebenenfalls die gesamte Push-to-Talk-over-Cellular Sitzung (=für alle Teilnehmer) beendet werden, insbesondere wenn die anderen Teilenehmer der Push-to-Talk-over-Cellular Sitzung es wünschen.

Insbesondere sind folgende zwei Anwendungen der Erfindung möglich:
1. Ein Teilnehmer A will auf eine andere Übertragunstrechnik bzw. Ein anderes Endgerät wechseln. Das macht primär im 1-1 Betrieb (Teilnehmer A spricht mit einem Teilnehmer) Sinn, mit Einschränkungen auch bei 1-n (Teilnehmer A spricht mit mehreren Teilnehmern).
2. Ein Teilnehmer A stellt z.B. einen Info-Dienst oder ähnliches dar. Die Zieladresse ist nicht der Teilnehmer A (das kann fallweise sogar eine Maschine sein) sondern ein Ziel( etwa eine Hotline) , das die B-Teilnehmer (die weiteren Teilnehmer einer PoC-Verbindung mit dem Teilnehmer A) anrufen können um genauere Informationen zu erhalten oder ähnliches. Da sich hinter der Adresse ein ganzes System verbergen kann, ist das auch bei 1-n- Verbindungen möglich.

## Patentansprüche

1. Verfahren um zu einem von einem Teilnehmer (A/1) einer bereits aufgebauten POC-Sitzung vorgegebenen Ziel (B/7) eine Verbindung (10) aufzubauen,
indem während der POC-Sitzung eine Nachricht von diesem Teilnehmer (A/1) an mindestens einen weiteren Teilnehmer (B/7) der POC-Sitzung übertragen wird,
welche Nachricht angibt, dass und zu welchem Ziel (1/9) die Verbindung aufgebaut werden soll.

2. Verfahren nach Anspruch 1 **dadurch gekennzeichnet, dass** die Nachricht (8) eine Signalisierungsnachricht ist.

3. Verfahren nach einem der vorhergehenden Ansprüche, **dadurch gekennzeichnet, dass** die Nachricht (8) eine Terminierungsnachricht ist, insbesondere eine für eine Terminierung der POC-Sitzung vorgesehene Nachricht.

4. Verfahren nach einem der vorhergehenden Ansprüche, **dadurch gekennzeichnet, dass** die Nachricht (8) eine Zieladresse des Ziels (1 oder 9) angibt, z.B. eine URL für VoIP.

5. Verfahren nach einem der vorhergehenden Ansprüche, **dadurch gekennzeichnet, dass** die Nachricht (8) eine Telefonnummer betreffend das Ziel (1 oder 9) angibt.

6. Verfahren nach einem der vorhergehenden Ansprüche, **dadurch gekennzeichnet, dass** die Nachricht die Art des gewünschten Gesprächs (GSM/VOIP/POC) angibt.

7. Verfahren nach einem der vorhergehenden Ansprüche, **dadurch gekennzeichnet, dass** mindestens ein weiterer Teilnehmer der POC-Sitzung aufgefordert wird, zu bestätigen, dass er eine Verbindung nur oder zusätzlich zum angegebenen Ziel will,
und dass nur im Fall der Feststellung einer Eingabe einer Bestätigung die weitere Verbindung (10) zum Ziel aufgebaut wird.

8. Verfahren nach einem der vorhergehenden Ansprüche, **dadurch gekennzeichnet, dass** die POC-Sitzung beendet wird, insbesondere dass sie kurz vor, gleichzeitig mit oder kurz nach dem Aufbau der weiteren Verbindung beendet wird.

9. Verfahren nach einem der vorhergehenden Ansprüche, **dadurch gekennzeichnet, dass** über die POC-Sitzung laufende Verbindungen des Teilnehmers (A) oder aller Teilnehmer beendet werden.

10. Verfahren auch einem der vorhergehenden Ansprüche,
**dadurch gekennzeichnet, dass** die POC-Sitzung eine Verbindung ist, die auf einen einzelnen Knopfdruck (2) an einem Mobilfunkendgerät (1) hin zu mindestens einem weiteren Mobilfunkendgerät (7) aufgebaut wird.

11. Verfahren nach Anspruch 11, **dadurch gekennzeichnet, dass** eine Push-to-Talk Verbindung zwischen zwei oder mehr als zwei Teilnehmern (A/1; B/7) aufgebaut wird.
